# EUROPEAN PATENT APPLICATION

(11) **EP 3 135 941 A1**
(43) Date of publication of application: **01.03.2017**
(21) Application number: 16185433.6
(22) Date of filing: 24.08.2016
(51) Int. Cl.: F16D 3/84

(54) **A PROTECTIVE EMBODIMENT WITH EXTENDED EXPECTED LIFE**

(30) Priority: 24.08.2015 TR 201510477
(71) Applicant: Tirsan Kardan Sanayi Ve Ticaret Anonim Sirketi, 45030 Manisa (TR)
(72) Inventor: BASARAN, Ayça, 45030 Manisa (TR); TASAN, Korkut, 45030 Manisa (TR); KORUK, Adnan, 45030 Manisa (TR); ÖZBAKIS, Murat, 45030 Manisa (TR)
(74) Representative: Dereligil, Ersin

(57) **Abstract**

The invention is an improvement on a piece called as bellows (5) and used for preventing entrance of impurities among the elements that allow axial motion in cardan shaft sliding assy (1), and it is characterized in that; it comprises addition of cord fabric (7) to said bellows (5) in order to increase the strength of the bellows (5).

## Description

### Technical Field

The invention relates to a reinforced protective embodiment positioned so as to protect against external factors the female and male pieces forming the sliding assy of a cardan shaft operating between the motor or the transmission box and the differential gear in a motor vehicle and used in order to transmit the power generated in the motor via rotating motion.

### State of the Art

The protective elements found on the sliding group can be deformed in time due to heavy environmental conditions and axial motion at high frequency. As the bellows component positioned in the part movable in axial direction becomes non-functional in time, impurities enter into the sliding group and cause abrasion on the sliding group, and thus reduce the expected life of the product.

In the prior art applications, tearing and deformation situations occur as a result of using rubber materials as the bellows component.

As a result, the above said drawbacks and the inadequacy of the prior art solutions about the subject have necessitated developing a high strength application against impacts.

### Purpose of the Invention

The invention relates to a component that has higher resistance against external factors by means of a bellows that is reinforced and strengthened by cord fabric. At the same time, since the bellows component is flexible, a reliable connection that is easier to assembly compared to any protective metal sheet material will be obtained. Additional costs due to press, welding etc. operations required for assembly of the metal sheet material will be eliminated. The bellows component is a protective component made of rubber material. The bellows will have a more rigid structure with the support of the cord fabric. Cord fabric will provide a more stable structure for axial motion situations at high frequency, and the risks of deformation will be minimized for the bellows component. In this way, the operating performance and the expected life of the bellows will be increased.

The primary purpose of the invention is to reinforce the protective bellows that has a flexible and therefore movable structure, and thus extend its expected life.

A similar purpose of the invention is to obtain bellows that wears down in a longer time period and thus provide improvement in terms of entrance of impurities into the sliding group and occurrence of related abrasion.

In order to achieve the above said purposes, the invention comprises a sliding assy, a spline profile, a yoke shaft, a tube sleeve, a bellows, a bellows groove, a cord fabric, a tube sleeve groove, 1^{st} Retaining ring, 2^{nd} Retaining ring, and a yoke shaft groove.

### Figures for Better Understanding of the Invention

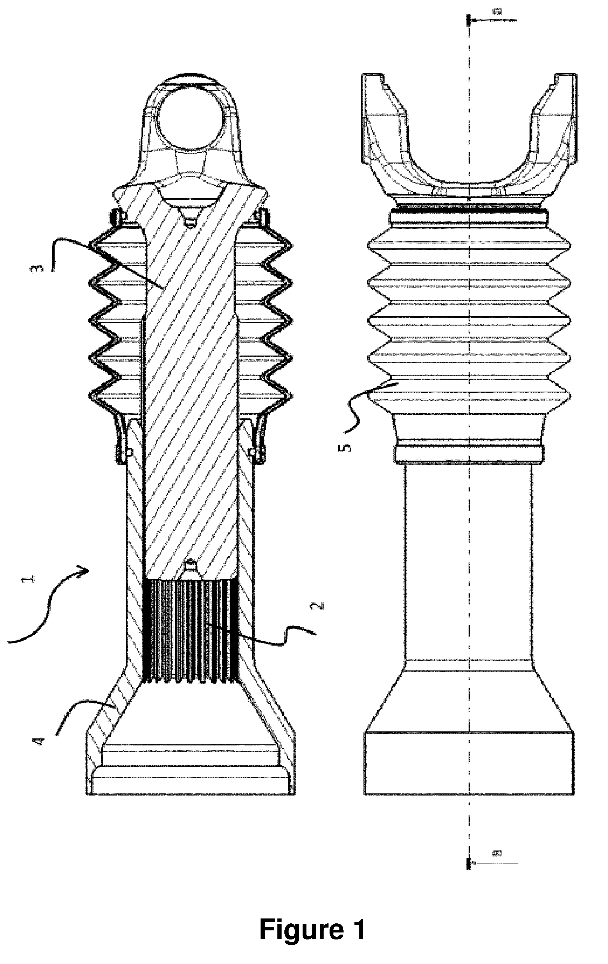

Figure 1 shows the cardan shaft side and section views.

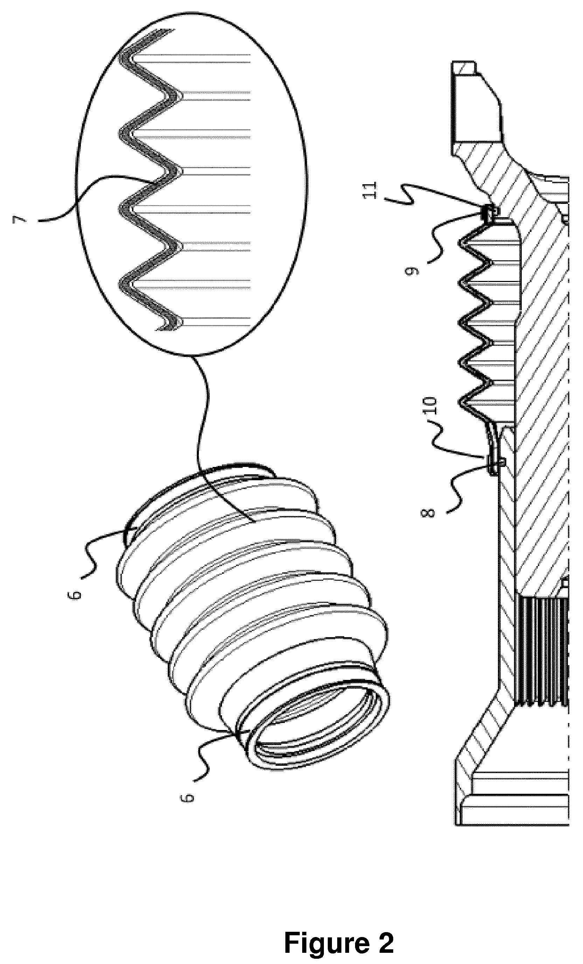

Figure 2 shows the cardan shaft front section view and the perspective view of the bellows according to the invention.

Components which are identical or which have at least widely identical functions are shown with the same number.

### Description of Parts References

- 1.: Sliding assy
- 2.: Spline profile
- 3.: Yoke shaft
- 4.: Tube sleeve
- 5.: Bellows
- 6.: Bellows groove
- 7.: Cord fabric
- 8.: Tube sleeve groove
- 9.: 1^{st} Retaining ring
- 10.: 2^{nd} Retaining ring
- 11.: Yoke shaft groove

### Detailed Description of the Invention

In this detailed description, the preferred embodiments of an additional embodiment in cardan shaft sliding group according to the invention is only disclosed for better understanding of the subject without forming any limiting effect.

The cardan shaft sliding assy (1) is an assembly that can be opened until the allowed distance in axial direction by means of the spline profiles (2) of the yoke shaft (3) and tube sleeve (4) parts. Since these parts are exposed to external environment conditions during their operation, various applications are present for the purpose of protecting the sliding group. Dust, mud, rock etc. impurities that may come from outside can cause abrasion, vibration, sound etc. problems on the sliding assy (1) in time. Subject matter the mounting component bellows (5) will protect the sliding group against external environment conditions and have a reinforced structure via addition of cord fabric (7). The cord fabric (7) reinforcement will be found in the presently used more flexible structure, as inserted between rubber layers.

The bellows (5) component will be fixed to the sliding group by means of the tube sleeve groove (8) and yoke shaft groove (11) which will be opened on the yoke shaft (3) and the tube sleeve (4). Similarly, the bellows component (5) will have bellows groove (6) at the front and rear parts. Mounting of the bellows (5) on the tube sleeve (4) will be performed by means of fixing components defined as the 1^{st} retaining ring (9) and 2^{nd} retaining ring (10).

## Claims

1. The invention is an improvement on a piece called as bellows (5) and used for preventing entrance of impurities among the elements that allow axial motion in cardan shaft sliding assy (1), and it is **characterized in that**; it comprises addition of cord fabric (7) to said bellows (5) in order to increase the strength of the bellows (5).
